# EUROPEAN PATENT APPLICATION

(11) **EP 3 232 387 A1**
(43) Date of publication of application: **18.10.2017**
(21) Application number: 17156892.6
(22) Date of filing: 20.02.2017
(51) Int. Cl.: G06Q 20/20, G07G 1/00

(54) **CHECKOUT SYSTEM AND SETTLEMENT DEVICE**

(30) Priority: 26.02.2016 JP 2016035714
(71) Applicant: Toshiba TEC Kabushiki Kaisha, Tokyo 141-0032 (JP)
(72) Inventor: YABU, Syuji, Shinagawa-ku, Tokyo 141-8562 (JP)
(74) Representative: Takeuchi, Maya

(57) **Abstract**

A settlement device determines whether or not the device performs a settlement process of accounting data in preference to another settlement device having a precedent transmission order, on the basis of predetermined determination conditions. When the transmission order which is set in the device is not final, identification information of the device is transferred together with accounting data when it is determined that the device preferentially performs the settlement process, and identification information of the another settlement device having a precedent transmission order is transferred together with accounting data when it is determined that the another settlement device preferentially performs the settlement process. When the transmission order which is set in the device is final, a registration device is notified of the identification information of the device when it is determined that the device preferentially performs the settlement process, and the registration device is notified of the identification information of the another settlement device having a precedent transmission order when it is determined that the another settlement device preferentially performs the settlement process. The registration device makes a report for guiding a customer to the settlement device identified by the identification information which is given notice of.

## Description

### FIELD

The present invention relates to a checkout or transaction settlement technology in general, and embodiments described herein relate in particular to a checkout system and a settlement device which is used in the system, and a method for processing settlement of a transaction.

### BACKGROUND

Checkout systems for volume retailers include a type in which a registration device generating accounting data necessary for the settlement of a transaction for each transaction and a settlement device performing a settlement process of the transaction on the basis of the accounting data are separated from each other. The registration device waits for the input of data regarding commodity sales. When the data regarding the commodity sales is input by an operator, the registration device generates accounting data on the basis of the data and transmits the accounting data to the settlement device. The settlement device waits for the input of payment data with respect to the accounting data. When the payment data is input by the operator, the settlement device performs the settlement process of a transaction on the basis of the accounting data and the payment data. The type of checkout system including the registration device and the settlement device separated from each other includes a two-person system in which separate store clerks respectively operate a registration device and a settlement device, and a division system, which is a so-called semi-self type, in which a store clerk and a shopper respectively operate a registration device and a settlement device.

In a case of the semi-self type, when a shopper takes time to operate a settlement device, the following shopper waits for settlement. In order to avoid such a situation, a plurality of settlement devices are connected to one registration device. The registration device selects any of the settlement devices for each transaction and transmits accounting data to the settlement device.

JP-A-2013-242839 is an example of related art.

To this end, there is provided a checkout system which is configured such that a registration device generating accounting data necessary for settlement of a transaction on the basis of input data and a plurality of settlement devices performing a settlement process on the basis of the accounting data are connected to each other through a network and which is configured to sequentially transmit the accounting data generated by the registration device through the network in a transmission order which is set between the plurality of settlement devices,
wherein each of the plurality of settlement devices includes
a reception unit that receives the accounting data transmitted through the network,
a determination unit that determines whether or not the device performs the settlement process of the accounting data received by the reception unit in preference to another settlement device having a precedent transmission order, on the basis of predetermined determination conditions,
a transmission unit that transmits identification information of the device when the determination unit determines that the device preferentially performs the settlement process in a case where the transmission order set in the device is not final, and transmits identification information of the another settlement device having a precedent transmission order when the determination unit determines that the another settlement device preferentially performs the settlement process, together with the accounting data, and
a notification unit that notifies the registration device of the identification information of the device when the determination unit determines that the device preferentially performs the settlement process in a case where the transmission order which is set in the device is final, and notifies the registration device of the identification information of the another settlement device having a precedent transmission order when the determination unit determines that the another settlement device preferentially performs the settlement process, and
wherein the registration device includes a reporting unit that makes a report for guiding a customer to the settlement device identified by the identification information which is given notice of by the notification unit.

Preferably, the determination unit determines that the settlement device having a higher order of priority for each time slot, which is allocated between the plurality of settlement devices, preferentially performs the settlement process, with reference to information of the order of priority for each time slot.

Preferably still, each of the plurality of settlement devices further includes a detection unit that detects an actual measurement value of a comparison target included in the settlement device, and
wherein the determination unit compares the actual measurement value of the comparison target, which is detected by the detection unit of the another settlement device having a precedent transmission order, with the actual measurement value of the comparison target which is detected by the detection unit of the device, and determines that the settlement device having a larger actual measurement value preferentially performs the settlement process.

Preferably yet, the settlement device further includes
a storage unit that stores the accounting data received by the reception unit,
an instructing unit that instructs the another settlement device having a precedent transmission order to clear the accounting data when the determination unit determines that the device preferentially performs the settlement process, and
a clearing unit that clears the accounting data stored in the storage unit when the clearing unit is instructed to clear the accounting data by the another settlement device.

The invention also relates to a settlement device of a checkout system which is configured such that a registration device generating accounting data necessary for settlement of a transaction on the basis of input data and a plurality of settlement devices performing a settlement process on the basis of the accounting data are connected to each other through a network and which is configured to sequentially transmit the accounting data generated by the registration device through the network in a transmission order which is set between the plurality of settlement devices, the settlement device comprising:
a reception unit that receives the accounting data transmitted through the network;
a determination unit that determines whether or not the device performs a settlement process of the accounting data received by the reception unit in preference to another settlement device having a precedent transmission order, on the basis of predetermined determination conditions;
a transmission unit that transmits identification information of the device when the determination unit determines that the device preferentially performs the settlement process in a case where the transmission order set in the device is not final, and transmits identification information of the another settlement device having a precedent transmission order when the determination unit determines that the another settlement device preferentially performs the settlement process, together with the accounting data; and
a notification unit that notifies the registration device of the identification information of the device when the determination unit determines that the device preferentially performs the settlement process in a case where the transmission order which is set in the device is final, and notifies the registration device of the identification information of the another settlement device having a precedent transmission order when the determination unit determines that the another settlement device preferentially performs the settlement process.

Suitably, the determination unit determines that the settlement device having a higher order of priority for each time slot, which is allocated between the plurality of settlement devices, preferentially performs the settlement process, with reference to information of the order of priority for each time slot.

Suitably still, the settlement device further includes a detection unit that detects an actual measurement value of a comparison target included in the settlement device, and
wherein the determination unit compares the actual measurement value of the comparison target, which is detected by the detection unit of the another settlement device having a precedent transmission order, with the actual measurement value of the comparison target which is detected by the detection unit of the device, and determines that the settlement device having a larger actual measurement value preferentially performs the settlement process.

Suitably yet, the settlement device further includes
a storage unit that stores the accounting data received by the reception unit,
an instructing unit that instructs the another settlement device having a precedent transmission order to clear the accounting data when the determination unit determines that the device preferentially performs the settlement process, and
a clearing unit that clears the accounting data stored in the storage unit when the clearing unit is instructed to clear the accounting data by the another settlement device.

The invention further relates to a method for processing, by a settlement device, settlement of a transaction, comprising the steps of:
- receiving, by a reception unit, the accounting data transmitted through the network;
- determining, by a determination unit, whether or not the device performs a settlement process of the accounting data received by the reception unit in preference to another settlement device having a precedent transmission order, on the basis of predetermined determination conditions;
- transmitting, by a transmission unit, identification information of the device when the determination unit determines that the device preferentially performs the settlement process in a case where the transmission order set in the device is not final, and transmitting identification information of the another settlement device having a precedent transmission order when the determination unit determines that the another settlement device preferentially performs the settlement process, together with the accounting data; and
- notifying, by a notification unit, a registration device of the identification information of the device when the determination unit determines that the device preferentially performs the settlement process in a case where the transmission order which is set in the device is final, and notifying the registration device of the identification information of the another settlement device having a precedent transmission order when the determination unit determines that the another settlement device preferentially performs the settlement process.

Suitably, the determining step by the determination unit comprises determining that the settlement device having a higher order of priority for each time slot, which is allocated between the plurality of settlement devices, preferentially performs the settlement process, with reference to information of the order of priority for each time slot.

Suitably still, the method further comprises the step of:
- detecting, by a detection unit, an actual measurement value of a comparison target included in the settlement device, and the determining step by a determination unit comprises
- comparing, by the determination unit, the actual measurement value of the comparison target, which is detected by the detection unit of another settlement device having a precedent transmission order, with the actual measurement value of the comparison target which is detected by the detection unit of the device, and determining that the settlement device having a larger actual measurement value preferentially performs the settlement process.

Suitably yet, the method further comprises the step of:
- storing, by a storage unit, the accounting data received by the reception unit;
- instructing, by an instructing unit, another settlement device having a precedent transmission order to clear the accounting data when the determination unit determines that the device preferentially performs the settlement process; and
- clearing, by a clearing unit, the accounting data stored in the storage unit when the clearing unit is instructed to clear the accounting data by the another settlement device.

The invention further concerns a method for performing a checkout,
comprising the steps of the method
according to any one of claims 6 to 9, further comprising the steps of:
- generating, by a registration device, accounting data necessary for settlement of a transaction on the basis of input data and
- performing, by each of a plurality of settlement devices, a settlement process on the basis of the accounting data are connected to each other through a network and
- sequentially transmitting the accounting data generated by the registration device through the network in a transmission order which is set between the plurality of settlement devices.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a schematic diagram of a checkout system according to this exemplary embodiment.
FIG. 2 is a block diagram illustrating main circuit configurations of a registration device and a settlement device.
FIG. 3 is a schematic diagram illustrating a configuration of a priority list memory.
FIGS. 4A and 4B are schematic diagrams illustrating configurations of accounting data and an accounting machine response command.
FIG. 5 is a flow chart illustrating a main procedure of information processing performed by a CPU of the registration device.
FIG. 6 is a flow chart illustrating a main procedure of an accounting data reception process performed by a CPU of the settlement device.
FIG. 7 is a flow chart illustrating the main procedure of the accounting data reception process performed by the CPU of the settlement device.
FIG. 8 is a schematic diagram illustrating a display example of a registration screen.
FIG. 9 is a schematic diagram illustrating a display example of an accounting confirmation screen.
FIG. 10 is a schematic diagram illustrating a display example of an accounting confirmation screen.
FIG. 11 is a schematic diagram illustrating a configuration of accounting data in a second exemplary embodiment.
FIG. 12 is a flow chart illustrating a main procedure of an accounting data reception process performed by a CPU of a settlement device in the second exemplary embodiment.

### DETAILED DESCRIPTION

In general, according to exemplary embodiments, there is provided a checkout system in which a settlement device serving as a transmission destination of accounting data is not selected in a registration device, and a settlement device used in the system. The corresponding methods are also defined in claims 9 to 13.

In an exemplary embodiment, a checkout system is configured such that a registration device generating accounting data necessary for settlement of a transaction on the basis of input data and a plurality of settlement devices performing a settlement process on the basis of the accounting data are connected to each other through a network. The checkout system sequentially transmits the accounting data generated by the registration device through the network in a transmission order which is set between the plurality of settlement devices.

In the checkout system, each of the plurality of settlement devices includes a reception unit, a determination unit, a transmission unit, and a notification unit. The registration device includes a reporting unit. The reception unit receives the accounting data transmitted through the network. The determination unit determines whether or not the device performs the settlement process of the accounting data received by the reception unit in preference to another settlement device having a precedent transmission order, on the basis of predetermined determination conditions. The transmission unit transmits identification information of the device when the determination unit determines that the device preferentially performs the settlement process in a case where the transmission order set in the device is not final, and transmits identification information of the another settlement device having a precedent transmission order when the determination unit determines that the another settlement device preferentially performs the settlement process, together with the accounting data. The notification unit notifies the registration device of the identification information of the device when the determination unit determines that the device preferentially performs the settlement process in a case where the transmission order which is set in the device is final, and notifies the registration device of the identification information of the another settlement device having a precedent transmission order when the determination unit determines that the another settlement device preferentially performs the settlement process. The reporting unit makes a report for guiding a customer to the settlement device identified by the identification information which is given notice of by the notification unit.

Hereinafter, exemplary embodiments will be described with reference to the accompanying drawings.

### First Exemplary Embodiment

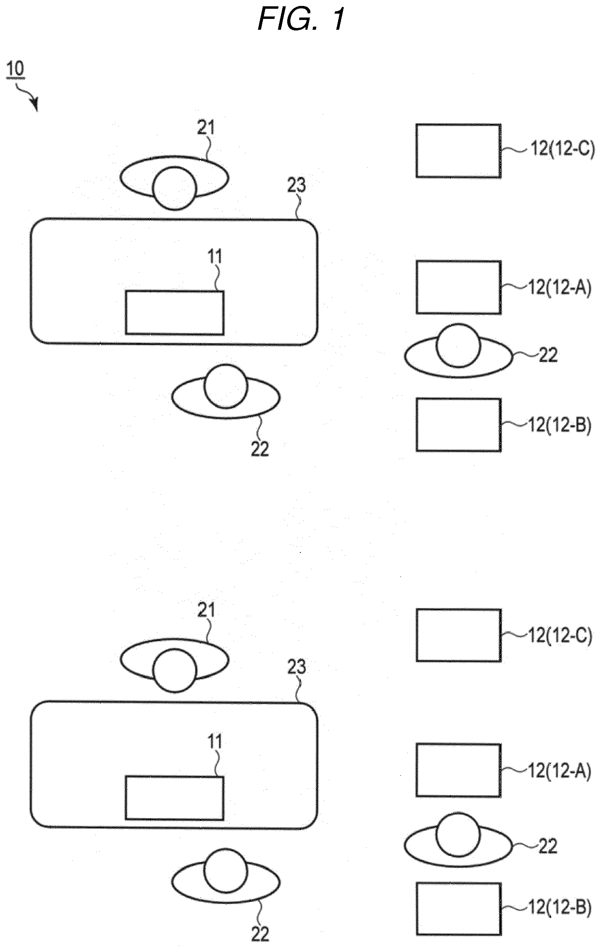

FIG. 1 is a schematic diagram of a checkout system 10 according to this exemplary embodiment. The checkout system 10 includes a plurality of registration devices 11 and a plurality of settlement devices 12. The number of settlement devices 12 is larger than the number of registration devices 11.

The registration devices 11 and the settlement devices 12 are disposed for each checkout lane in a store. The number of registration devices 11 and the number of settlement devices 12 that are disposed at one checkout lane are arbitrary. FIG. 1 illustrates a case where one registration device 11 and three settlement devices 12 are disposed at each of two checkout lanes. In detail, one registration device 11 and three settlement devices 12 (12-A, 12-B, 12-C) are disposed for one checkout lane. A distance between the settlement device 12-A and the registration device 11 is shortest, a distance between the settlement device 12-B and the registration device 11 is second shortest, and a distance between the settlement device 12-C and the registration device 11 is longest.

The checkout system 10 is a semi-self type system. That is, an operator of the registration device 11 is a store clerk 21 having a role as a checker. An operator of the settlement device 12 is a shopper 22 for a purchased commodity subjected to sales registration by the registration device 11.

In FIG. 1, the registration device 11 is mounted to a work table 23. The work table 23 includes a rectangular top plate. The plurality of work tables 23 are disposed such that the longitudinal directions of the top plates are substantially in parallel with each other, thereby forming a passage (checkout lane) for the shopper 22.

The registration device 11 has functions of the sales registration of commodities, the creation of accounting data, and the transmission of accounting data to the settlement device 12. The sales registration of commodities means that pieces of data regarding commodities purchased by the shopper 22 are registered in the registration device 11. For example, a scanner scans bar codes attached to the commodities, and thus pieces of data such as sales quantities and sales amounts of the commodities are registered in the registration device 11. The accounting data means data regarding the accounting of commodities subjected to sales registration as one transaction. Commodity codes, commodity names, unit prices, sales quantities, and sales amounts of commodities subjected to sales registration, a total quantity, a total amount, and the like are included in the accounting data.

The registration device 11 sets one of the three settlement devices 12 disposed at the same checkout lane as a transmission destination of accounting data. Which settlement device 12 is set as a transmission destination is arbitrary. The registration device 11 transmits accounting data to one settlement device 12 which is set as a transmission destination.

The settlement device 12 has a function of a settlement process. That is, when the settlement device 12 receives accounting data from the registration device 11, the settlement device processes the settlement of a transaction on the basis of the accounting data. The settlement process means the processing of settlement of a transaction which is a commodity sales action, based on the accounting data. Cash, a credit card, electronic money, and the like are used for the settlement.

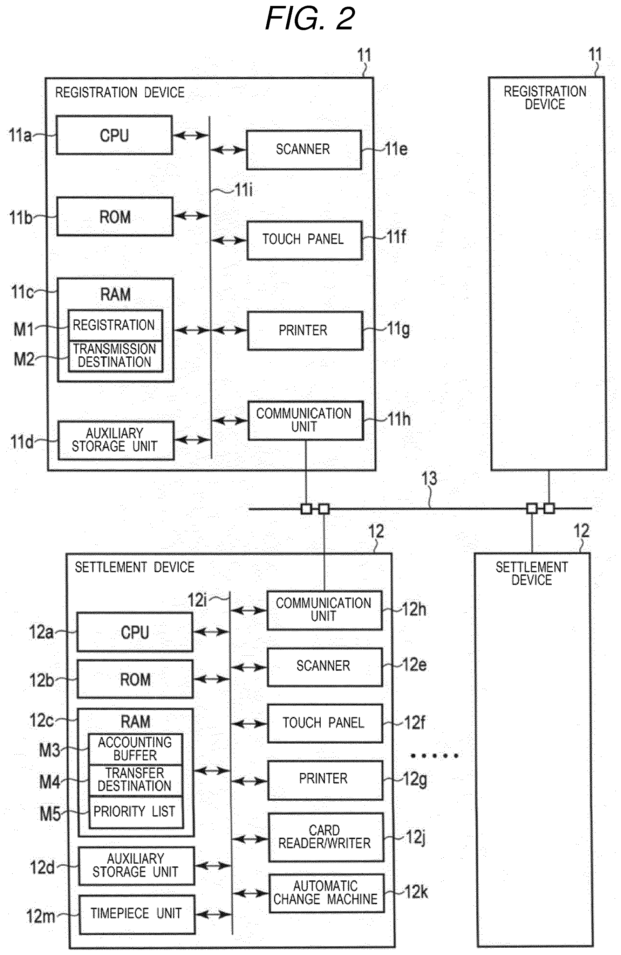

FIG. 2 is a block diagram illustrating main circuit configurations of the registration device 11 and the settlement device 12. All of the registration device 11 and the settlement devices 12 at each checkout lane are connected to a local area network (LAN) 13 which is a network in a store. Although not shown in the drawing, a server is connected to the LAN 13. The server stores a commodity database having commodity information such as commodity names and unit prices set therein, in association with commodity codes of respective commodities. The server may further store other databases.

The registration device 11 and the settlement device 12 exchange information through the LAN 13. Meanwhile, another communication network, such as the Internet or a wireless LAN, may be used as the network, instead of the LAN 13. In addition, the registration device 11 and the settlement device 12 may exchange information such as accounting data through the server.

The registration device 11 includes a CPU 11a, a ROM 11b, a RAM 11c, an auxiliary storage unit 11d, a scanner 11e, a touch panel 11f, a printer 11g, a communication unit 11h, and a transmission system 11i.

The CPU 11a is connected to the ROM 11b, the RAM 11c, and the auxiliary storage unit 11d through the transmission system 11i, thereby constituting a computer. The CPU 11a is equivalent to a center portion of the computer. The CPU 11a controls units to perform various functions as the registration device 11, on the basis of an operating system, middleware, and application programs that are stored in the ROM 11b and the RAM 11c.

The ROM 11b is equivalent to a main storage portion of the computer. The ROM 11b stores the above-mentioned operating system. The ROM 11b may store the above-mentioned middleware or application programs. In addition, the ROM 11b may store data to be referred to when the CPU 11a performs various processes.

The RAM 11c is equivalent to a main storage portion of the computer. The RAM 11c stores data to be referred to, when the CPU 11a performs various processes. In addition, the RAM 11c is also used as a so-called work area which may store data temporarily used when the CPU 11a performs various processes.

The auxiliary storage unit 11d is equivalent to an auxiliary storage portion of the computer. The auxiliary storage unit 11d stores data used when the CPU 11a performs various processes, or data created by processing in the CPU 11a. As the auxiliary storage unit 11d, for example, an EEPROM, an HDD, an SSD, or the like can be used. The application programs stored in the ROM 11b or the auxiliary storage unit 11d include a control program describing information processing performed by the registration device 11.

The scanner 11e reads a bar code attached to a commodity to thereby obtain a commodity code of the commodity. The touch panel 11f includes a display device and a touch sensor. The touch panel 11f includes a touch panel for a store clerk and a touch panel for a customer. The touch panel 11f for a store clerk is provided on the work table 23 so that a display screen faces a work space of the store clerk 21. The touch panel 11f for a customer is provided on the work table 23 so that a display screen faces the passage for the shopper 22. The printer 11g issues a receipt by printing various character strings, an image, or the like on receipt paper. The communication unit 11h performs data communication with the plurality of settlement devices 12 connected to each other through the LAN 13. The communication unit 11h can also perform data communication with another registration device 11 through the LAN 13.

The transmission system 11i transmits data exchanged between the CPU 11a, the ROM 11b, the RAM 11c, the auxiliary storage unit 11d, the scanner 11e, the touch panel 11f, the printer 11g, and the communication unit 11h. As the transmission system 11i, a well-known system including various bus, such as a system bus, and various interface circuits connecting the buses and the units to each other can be used. As hardware of the registration device 11, for example, the existing POS terminal can be used.

The settlement device 12 includes a CPU 12a, a ROM 12b, a RAM 12c, an auxiliary storage unit 12d, a scanner 12e, a touch panel 12f, a printer 12g, a communication unit 12h, a card reader/writer 12j, an automatic change machine 12k, a timepiece unit 12m, and a transmission system 12i.

The card reader/writer 12j has a function of reading data recorded in a card and a function of writing data in the card. The card includes a card for settlement such as a credit card, a debit card, a electronic money card, and a prepaid card. The automatic change machine 12k receives coins and bills that are inserted. In addition, the automatic change machine 12k discharges coins and bills as change. The timepiece unit 12m clocks the present date and time. The other units of the CPU 12a, the ROM 12b, the RAM 12c, the auxiliary storage unit 12d, the scanner 12e, the touch panel 12f, the printer 12g, the communication unit 12h, and the transmission system 12i have the same functions as those of the registration device 11. That is, the CPU 12a is connected to the ROM 12b, the RAM 12c, and the auxiliary storage unit 12d through the transmission system 12i, thereby constituting a computer. The CPU 12a controls units to perform various operations as the settlement device 12, on the basis of an operating system, middleware, and application programs that are stored in the ROM 12b and the RAM 12c. The application programs stored in the ROM 12b or the auxiliary storage unit 12d include a control program describing information processing performed by the settlement device 12. As hardware of the settlement device 12, for example, a POS terminal corresponding to the existing self-type can be used.

The checkout system 10 having such a configuration forms data memory regions M1 and M2 in the RAM 11c of the registration device 11. The data memory region M1 is a region for storing commodity codes, commodity names, unit prices, sales quantities, and sales amounts of commodities subjected to sales registration as one transaction. The commodity code is a specific code for individually identifying respective commodities. A commodity code represented by, for example, a bar code is attached to each commodity, and the bar code is scanned by the scanner 11e, thereby allowing the registration device 11 to acquire the commodity code. The commodity name and the unit price are the name of a commodity and a unit price for one commodity identified by the corresponding commodity code. Hereinafter, the data memory region M1 is referred to as a registration memory M1.

The data memory region M2 stores transmission destination information. The transmission destination information is information for identifying the settlement device 12 serving as a transmission destination of accounting data. In this exemplary embodiment, a transmission order of accounting data is set in advance between three settlement devices 12 disposed at the same checkout lane as that of the registration device 11. Information for identifying the settlement device 12 which is first ranked in the transmission order is stored in the data memory region M2 as transmission destination information. For example, a default value of transmission destination information is stored in the auxiliary storage unit 11d, and the CPU 11a writes the default value in the data memory region M2 during starting-up. A specific ID is set in advance in each settlement device 12. The ID can be used as the transmission destination information. Alternatively, a number, a sign, a code, and the like may be allocated in association with the ID of each settlement device 12 and may be used as transmission destination information. Hereinafter, the data memory region M2 will be referred to as a transmission destination memory M2.

The checkout system 10 forms data memory regions M3, M4, and M5 in the RAM 12c of the settlement device 12. The data memory region M3 is a region that stores accounting data. Hereinafter, the data memory region M3 will be referred to as an accounting buffer M3.

The data memory region M4 stores transfer destination information. The transfer destination information is information for identifying another settlement device 12 serving as a transfer destination of accounting data, that is, the settlement device 12 which is ranked next to the device in the transmission order. Meanwhile, transfer destination information is not set in the settlement device 12 which is latest in the transmission order. For example, a default value of transfer destination information is stored in the auxiliary storage unit 12d, and the CPU 12a writes the default value in the data memory region M4 during starting-up. A specific ID is set in advance in each settlement device 12. The ID can be used as the transfer destination information. Alternatively, a number, a sign, a code, and the like may be allocated in association with the ID of each settlement device 12 and may be used as transfer destination information. Hereinafter, the data memory region M4 will be referred to as a transfer destination memory M4.

The data memory region M5 stores a priority list table. The priority list table shows the order of priority of a settlement process which is set for each time slot with respect to the plurality of settlement devices 12 that are disposed at one checkout lane.

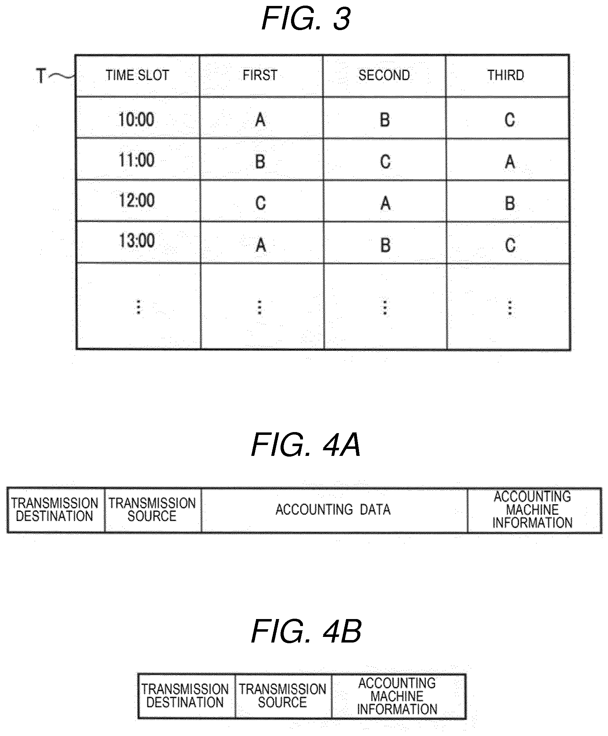

FIG. 3 illustrates an example of a priority list table T when three settlement devices 12 are disposed at one checkout lane as illustrated in FIG. 1. The priority list table T stores information for identifying the settlement devices 12 having the first, second, and third orders of priority for each time slot per in hour units. The information is, for example, a specific ID of each settlement device. Incidentally, in FIG. 3, an ID of the settlement device 12-A is set to be "A", an ID of the settlement device 12-B is set to be "B", and an ID of the settlement device 12-C is set to be "C". Meanwhile, it is needless to say that the time slot is not limited to a unit of one hour.

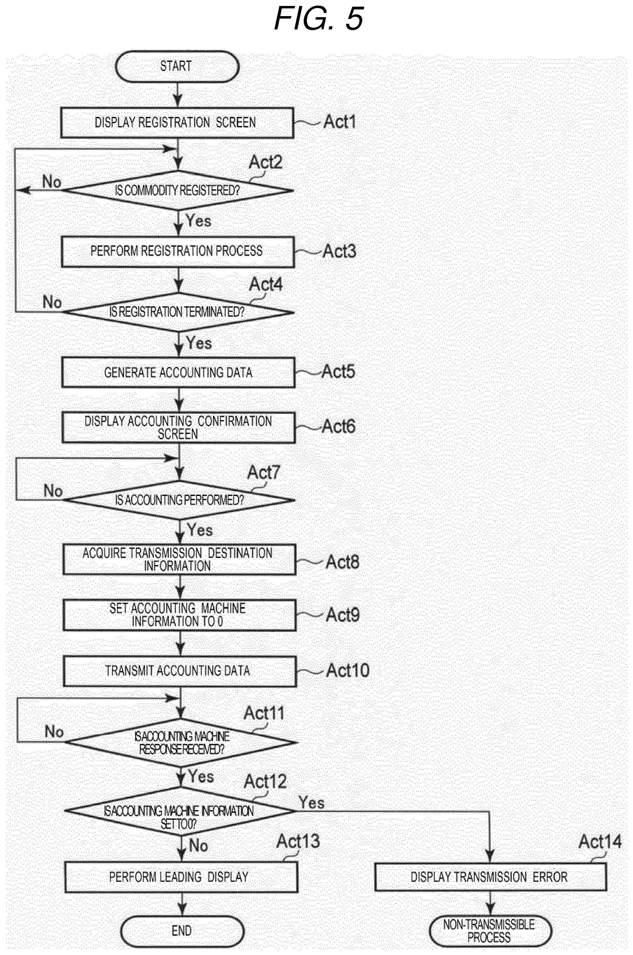

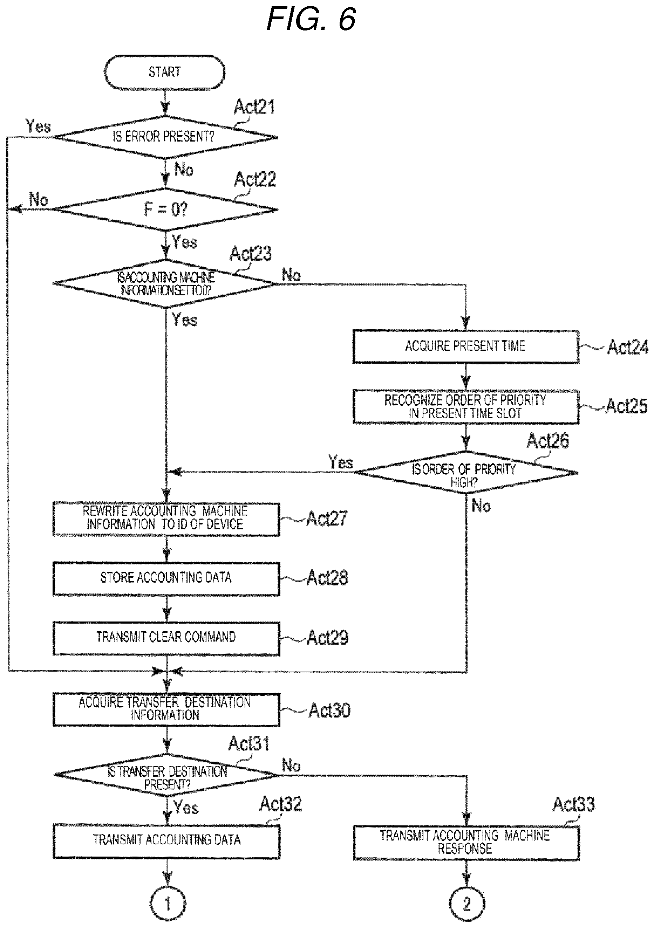

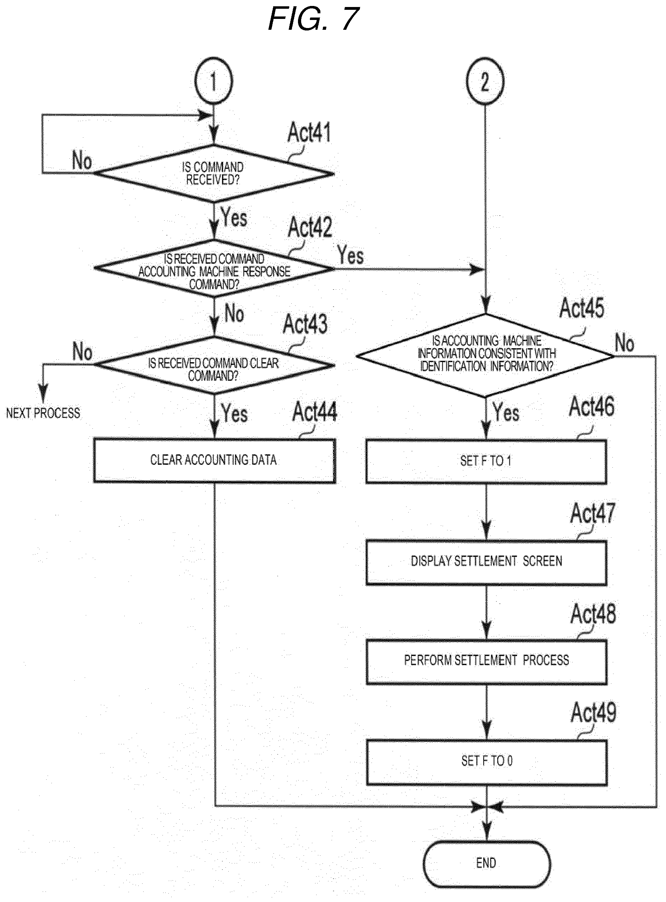

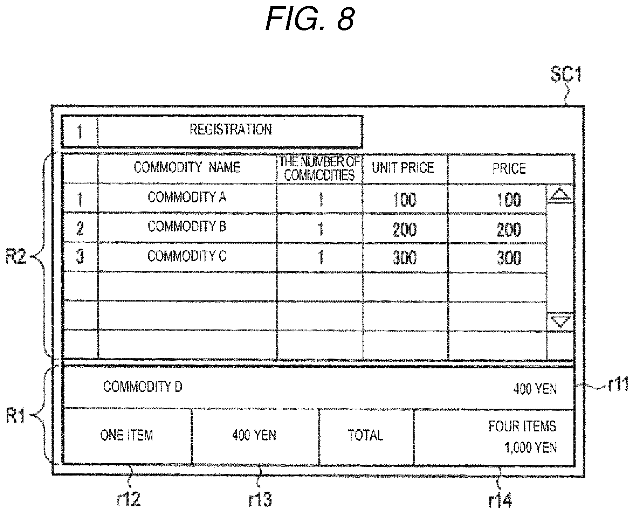

FIG. 5 is a flow chart illustrating a main procedure of information processing which is performed by the CPU 11a of the registration device 11 in accordance with a control program. FIGS. 6 and 7 are flow charts illustrating a main procedure of information processing which is performed by the CPU 12a of the settlement device 12 in accordance with a control program when accounting data is received. FIGS. 8 to 10 are plan views illustrating an example of a screen displayed on the touch panel 11 f of the registration device 11. Hereinafter, the operation of the checkout system 10 will be described with reference to FIGS. 5 to 10. Meanwhile, contents of processing to be described below are just examples, and various processes capable of obtaining the same results can be appropriately used.

First, the operation of the registration device 11 will be described.

When the registration device 11 is started up in a mode in which a process of registering a purchased commodity is performed, the CPU 11a starts a control process in a procedure illustrated in the flow chart of FIG. 5. First, the CPU 11a displays a registration screen SC1 (see FIG. 8) on a portion of the screen of the touch panel 11f, as Act1.

The registration screen SC1 displays contents of the registration memory M1, and makes a store clerk 21 confirm an execution state of the registration process. An example of the registration screen SC1 is illustrated in FIG. 8. The registration screen SC1 includes display areas R1 and R2. The display area R1 displays a commodity name, a unit price, a sales quantity (the number of commodities), and a sales amount of the latest commodity subjected to purchase registration, and a total quantity and a total amount of purchased commodities after the commodity is registered. The display area R2 displays a list of commodity names, unit prices, sales quantities (the number of commodities), and sales amounts of commodities subjected to purchase registration before the commodity displayed in the display area R1.

Meanwhile, although not shown in the drawing, the CPU 11a displays various functional buttons such as commodity buttons for the store clerk 21 to designate commodities and a subtotal button, outside a region set to be the registration screen SC1 in the screen of the touch panel 11f.

When the store clerk 21 confirms that the registration screen SC1 is displayed on the touch panel 11f, the store clerk recognizes that the sales registration of purchased commodities can be performed. Consequently, when the shopper 22 brings a purchased commodity to the work table 23, the store clerk 21 sequentially inputs commodity codes of the purchased commodities by operating, for example, the scanner 11e or the commodity buttons. When the input of the commodity codes of all of the purchased commodities is terminated, the store clerk 21 touches the subtotal button. The sales registration of commodities purchased by one shopper is terminated by the above-described operation.

The CPU 11a of the registration device 11 performs the following information processing with respect to such a sales registration operation. First, the CPU 11a waits for the registration of commodities, as Act2. When a commodity code is input through the scanner 11e or the commodity button (YES in Act2), the CPU 11a performs a process of registering commodity sales data, as Act3. That is, the CPU 11a acquires commodity information, such as a commodity name and a unit price, which is set in a commodity database in association with the commodity code. In addition, the CPU 11a multiplies a sales quantity by the unit price to thereby calculate an amount corresponding to the sales quantity, that is, a so-called sales amount. The sales quantity is a numerical value when the value is input using a numerical keypad or the like before a commodity code is input, and is "1" when nothing is input. Thus, the CPU 11a creates commodity sales data including a commodity code, a commodity name, a unit price, a sales quantity, and a sales amount. The CPU 11a stores the commodity sales data in the registration memory M1. At this time, the CPU 11a updates the registration screen SC1 on the basis of the data of the registration memory M1.

The CPU 11a confirms whether or not the termination of registration of a sales commodity is announced, as Act4. For example, when the subtotal button is touched, the CPU 11a determines that the termination of registration is announced. When the termination of registration is not announced (NO in Act4), the CPU 11a returns to Act2 to wait for the registration of a commodity. When the termination of registration is announced (YES in Act4), the CPU 11a generates accounting data on the basis of the data of the registration memory M1, as Act5. Here, the CPU 11a constitutes a generation unit that generates accounting data necessary for the settlement of a transaction on the basis of input data (data regarding commodity sales), by the processes of Act2 to Act5.

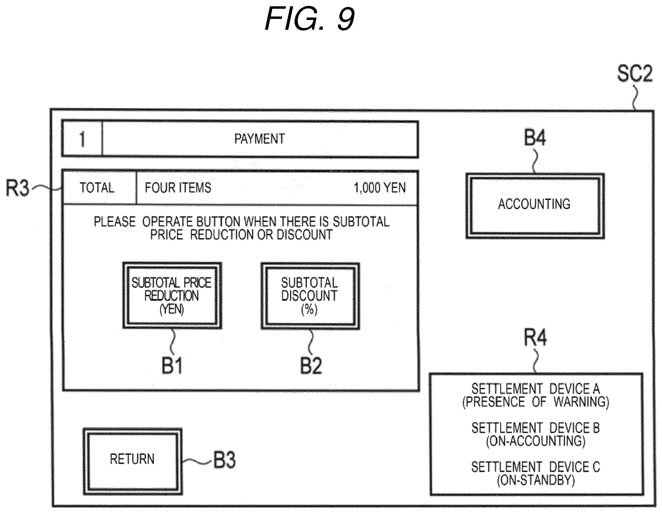

When the accounting data is generated, the CPU 11a displays an accounting confirmation screen SC2 (see FIG. 9) on a portion of a screen of a touch panel 11g1, as Act6.

An example of the accounting confirmation screen SC2 is illustrated in FIG. 9. The accounting confirmation screen SC2 includes display areas R3 and R4 and buttons B1, B2, B3, and B4. The display area R3 displays a total quantity, a total amount, and the like of commodities which are stored in the registration memory M1. The buttons B1 and B2 are respectively a subtotal price reduction button B1 and a subtotal discount button B2 for the store clerk 21 to designate the application of a price reduction or a discount to a total amount. The button B3 is a return button B3 for the store clerk 21 to designate the return of a partial region of the screen of the touch panel 11g1 to the registration screen SC1. The button B4 is an accounting button B4 for the store clerk 21 to instruct transition to accounting after the registration of commodities for one transaction is terminated. The display area R4 displays states of the settlement devices 12. The states of the settlement devices 12 include "on-accounting", "presence of warning", "on-standby", and the like. The "on-accounting" means a state where a settlement process is performed by the settlement device 12. The CPU 12a of the settlement device 12 performing the settlement process has a function of generating an in-processing signal. The in-processing signal is output to the registration device 11 through the LAN 13 from the communication unit 12h. The "presence of warning" means a state of, for example, the shortage of changes remaining or the shortage of receipt paper in the settlement device 12. The automatic change machine 12k has a function of generating a warning signal indicating the shortage of changes when the amount of money remaining which is accommodated as change becomes smaller than a threshold value. The printer 12g has a function of generating a warning signal indicating the shortage of receipt paper when the amount of receipt paper remaining becomes smaller than a threshold value. The warning signals are output to the registration device 11 through the LAN 13 from the communication unit 12h. The "on-standby" means a state where the settlement device 12 waits for a settlement process. The CPU 12a of the settlement device 12 that does not perform a settlement process and has no warning such as receipt shortage or change shortage has a function of generating an on-standby signal. The on-standby signal is output to the registration device 11 through the LAN 13 from the communication unit 12h.

When the CPU 11a of the registration device 11 receives an in-processing signal, a warning signal, or an on-standby signal which is sent from the settlement devices 12, the CPU updates state information of the display area R4.

In a case where the shopper 22 is allowed to proceed to accounting, the store clerk 21 confirming the accounting confirmation screen SC2 touches the accounting button B4.

When the accounting button B4 is touched (YES in Act7), the CPU 11a acquires transmission destination information stored in the transmission destination memory M2, as Act8. In addition, the CPU 11a sets accounting machine information to an initial value of "0", as Act9. The accounting machine information is information for identifying the settlement device 12 that preferentially performs an accounting process. A specific ID is set in advance in each settlement device 12. The ID can be used as the accounting machine information. At the present point in time, the settlement device 12 that preferentially performs an accounting process is not determined. For this reason, the accounting machine information is set to an initial value of "0".

As Act10, the CPU 11a outputs the accounting data generated in the process of Act5, the transmission destination information acquired by the process of Act8, and the accounting machine information which is set in the process of Act9 to the communication unit 11h. The CPU 11a instructs the communication unit 11h to transmit a data message including the accounting data and the accounting machine information with the settlement device 12 identified by the transmission destination information as a destination. In the communication unit 11h, an accounting data message including a transmission destination address, a transmission source address, accounting data, and accounting machine information is created in response to the instruction as illustrated in FIG. 4A, and is transmitted on the LAN 13. The transmission destination address is a communication address of the settlement device 12 identified by the transmission destination information. The transmission source address is a communication address of the registration device 11. The accounting data message is received by one settlement device in which a transmission destination address is set as a communication address, among the plurality of settlement devices 12 connected to the LAN 13. That is, the communication unit 12h of the settlement device 12 receives an accounting data message of which the transmission destination address is a communication address of the device, among accounting data messages transmitted on the LAN 13. Here, the CPU 11a of the registration device 11 constitutes a transmission unit that transmits accounting data to one settlement device 12 set as a transmission destination, among the plurality of settlement devices 12, together with accounting machine information having an initial value of "0" in cooperation with the communication unit 11h, by the processes of Act8 to Act10. On the other hand, the CPU 12a of the settlement device 12 constitutes a reception unit in cooperation with the communication unit 12h.

When the CPU 12a of the settlement device 12 receives an accounting data message through the communication unit 12h, the CPU starts information processing in a procedure illustrated in the flow charts of FIGS. 6 and 7. First, the CPU 12a confirms whether or not an error occurs, as Act21. The error means, for example, a case where the automatic change machine 12k is out of money for change (no-change error). Alternatively, the error means, for example, a case where the printer 12g is out of receipt paper (out-of-paper error). Meanwhile, the error is not limited to the above-mentioned state. For example, it may be regarded that the error is occurred when the money for change becomes smaller than a predetermined amount (change near-end), and the amount of receipt paper remaining becomes smaller than a predetermined amount (paper near-end). When an error occurs (YES in Act21), the CPU 12a proceeds to the process of Act30.

When an error does not occur (NO in Act21), the CPU 12a determines whether or not a busy flag F is reset to "0", as Act22. The busy flag is information of 1 bit which is reset to "0" while the settlement device 12 does not perform a settlement process and which is reset to "1" until a settlement process is terminated when the settlement process is started. The busy flag F is stored in, for example, the RAM 12c. When the busy flag F is set to "1" (NO in Act22), a settlement process of another accounting data is performed in the settlement device 12, and thus it is not possible to perform a settlement process of accounting data included in the accounting data message. In this case, the CPU 12a proceeds to the process of Act30.

When the busy flag F is reset to "0" (YES in Act22), the CPU 12a determines whether or not accounting machine information of an accounting data message is "0", as Act23. When the accounting machine information is "0" (YES in Act23), the CPU 12a proceeds to the process of Act27.

When the accounting machine information is a value other than "0", that is, identification information of another settlement device 12, the CPU 12a acquires a present time clocked by the timepiece unit 12m, as Act24. The CPU 12a retrieves the priority list table T as Act25 and recognizes the order of priority of each settlement device in a time slot including the present time. The CPU 12a compares the settlement device with another settlement device identified by the accounting machine information as Act26, and determines whether or not the order of priority of the device is high.

As a result of the determination, when the order of priority of the device is high (YES in Act26), the settlement device preferentially performs a settlement process on another settlement device identified by accounting machine information, that is, another settlement device having a precedent transmission order. In this case, the CPU 12a proceeds to the process of Act27. On the other hand, when the order of priority of the device is low (NO in Act26), another settlement device having a precedent transmission order preferentially performs a settlement process. In this case, the CPU 12a proceeds to the process of Act30. Here, the CPU 12a constitutes a determination unit by the processes of Act23 to Act26. Specifically, when the accounting machine information included in the accounting data message is an initial value of "0", it is determined that the device preferentially performs a settlement process of accounting data. When the accounting machine information is identification information of another settlement device, it is determined whether or not the device preferentially performs a settlement process as compared to another settlement device, on the basis of information of the present time clocked by the timepiece unit 12m and data which is set in the priority list table T.

In Act27, the CPU 12a rewrites the accounting machine information of the accounting data message to identification information (ID) from the device. In addition, the CPU 12a stores accounting data included in the accounting data message in the accounting buffer M3, as Act28. Further, the CPU 12a instructs the communication unit 12h to transmit a clear command, as Act29. In the communication unit 12h, the clear command is created in response to the instruction, and is transmitted on the LAN 13. The clear command can be received by a settlement device connected to the LAN 13. Here, the CPU 12a constitutes a storage unit in cooperation with the RAM 12c by the process of Act27. In addition, the CPU 12a constitutes an instructing unit in cooperation with the communication unit 12h by the process of Act29. Meanwhile, the order of the processes of Act27 to Act29 is not limited to the above-described order. The order of the processes may be appropriately changed. When the processes of Act27 to Act29 are terminated, the CPU 12a proceeds to the process of Act30.

In Act30, the CPU 12a acquires transfer destination information stored in the transfer destination memory M4. The CPU 12a determines the presence or absence of a transfer destination, as Act31. When the transfer destination information is identification information of another settlement device, the CPU 12a determines that a transfer destination is present. When transfer destination information is not set, the CPU 12a determines that a transfer destination is absent.

When a transfer destination is present (YES in Act31), the CPU 12a outputs the transfer destination information to the communication unit 12h, as Act32. The CPU 12a instructs the communication unit 12h to transmit the accounting data message. In the communication unit 12h, an accounting data message including a transmission destination address, a transmission source address, accounting data, and accounting machine information is created in response to the instruction as illustrated in FIG. 4A, and is transmitted on the LAN 13. The transmission destination address is a communication address of another settlement device identified by the transfer destination information. The transmission source address is a communication address of the settlement device 12. Regarding the accounting data, accounting data of the received accounting data message is diverted as it is. When the accounting machine information is updated by the process of Act27, the accounting machine information is the updated accounting machine information, that is, identification information of the settlement device 12. When the accounting machine information is not updated, the accounting machine information of the received accounting data message is diverted as it is. Here, the CPU 12a constitutes a transmission unit in cooperation with the communication unit 12h by the processes of Act30 to Act32.

On the other hand, when a transfer destination is absent (NO in Act31), the CPU 12a instructs the communication unit 12h to transmit an accounting machine response command, as Act33. In the communication unit 12h, an accounting machine response command including a transmission destination address, a transmission source address, and accounting machine information is created in response to the instruction as illustrated in FIG. 4B, and is transmitted on the LAN 13. The transmission destination address is a communication address allowing reception by the registration device 11 and all of the other settlement devices. The transmission source address is a communication address of the settlement device 12. When the accounting machine information is updated by the process of Act27, the accounting machine information is the updated accounting machine information, that is, identification information of the settlement device 12. When the accounting machine information is not updated, accounting machine information of the received accounting data message is diverted as it is. Here, the CPU 12a constitutes a notification unit in cooperation with the communication unit 12h by the process of Act33.

The CPU 12a transmitting the accounting data in Act32 waits for the reception of a command, as Act41. When the command is received through the LAN 13 (YES in Act41), the CPU 12a confirms whether or not the command is an accounting machine response command. When the command is the accounting machine response command (YES in Act42), the CPU 12a proceeds to the process of Act45.

When the received command is not the accounting machine response command (NO in Act42), the CPU 12a confirms whether or not the command is a clear command. When the command is the clear command (YES in Act42), the CPU 12a clears accounting data of the accounting buffer M3, as Act44. Then, the CPU 12a terminates the process of receiving accounting data. The clear command is transmitted from the settlement device 12 that determines that the settlement device itself preferentially performs an accounting process. Therefore, in the settlement device 12 having a transmission order precedent to that of the settlement device 12, accounting data is cleared from the accounting buffer M3. Here, the CPU 12a constitutes a clearing unit by the process of Act44. Meanwhile, when the clear command is received in a state where accounting data is not stored in the accounting buffer M3, the CPU 12a does not substantially perform any process.

When the accounting machine response command is received in Act33 or the accounting machine response command is received in Act42, the CPU 12a confirms whether or not accounting machine information included in the accounting machine response command is consistent with identification information of the CPU itself, as Act45. When the accounting machine information is not consistent with the identification information (NO in Act45), the CPU 12a terminates the process of receiving accounting data.

When the accounting machine information included in the accounting machine response command is consistent with the identification information of the CPU itself, (YES in Act45), the settlement device 12 is decided as an accounting machine. In this case, the CPU 12a sets a busy flag F to "1", as Act46. In addition, the CPU 12a displays a settlement screen on the touch panel 12f, as Act47. The CPU 12a performs a settlement process of a transaction on the basis of the accounting data stored in the accounting buffer M3, as Act48. The settlement screen is a screen that supports a settlement operation by the shopper 22. For example, a total amount of purchased commodities is displayed on the settlement screen. In addition, buttons for selecting a payment method such as cash, a credit card, or electronic money, and the like are also displayed on the settlement screen. The settlement process is a process for performing the settlement of a transaction shown in accounting data in accordance with the operation of the shopper 22 and is the same as a process which is performed by an existing self-checkout POS terminal and the like, and thus a detailed description thereof will be omitted. When the settlement process is terminated, the CPU 12a resets the busy flag F to "0", as Act49. Then, the CPU 12a terminates the process of receiving accounting data.

The CPU 11 a of the registration device 11 transmitting accounting data in Act10 waits for an accounting machine response command, as Act11. When the accounting machine response command is received (YES in Act11), the CPU 11a confirms whether or not accounting machine information included in the response command is set to an initial value of "0", as Act12. When the accounting machine information is not set to an initial value of "0", that is, when the accounting machine information is identification information of any settlement device, the CPU 11a performs leading display on the accounting confirmation screen SC2, as Act13.

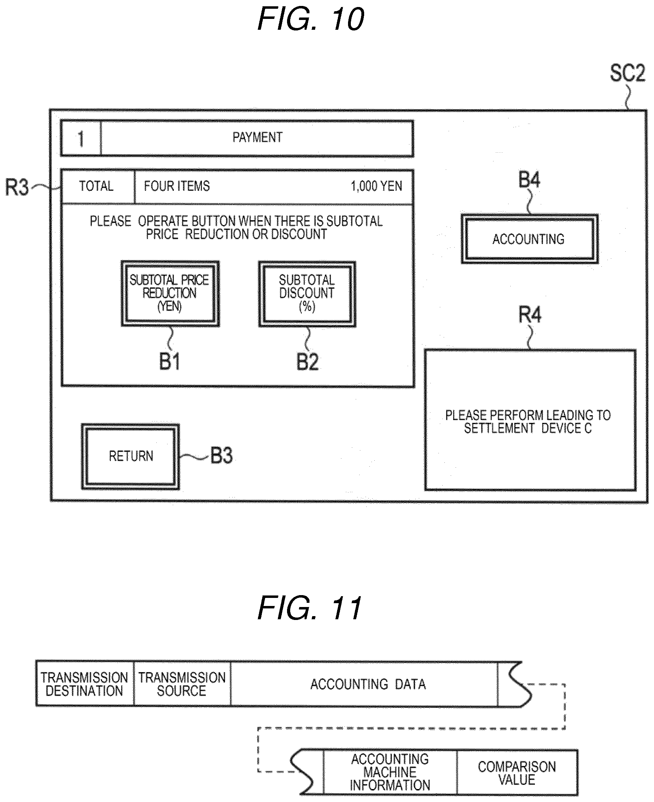

FIG. 10 illustrates an example of the accounting confirmation screen SC2 subjected to leading display. This example indicates a case where a response command for accountableness is transmitted from the settlement device 12-C. The leading display is display for guiding a customer to the settlement device 12-C notifying a settlement process being executable. The leading display is performed in the display area R4. The store clerk 21 confirming the leading display leads the shopper 22 so as to perform accounting by the settlement device 12-C which is reported by the leading display. For example, the shopper 22 led to the settlement device 12-C moves to a location where the settlement device 12-C is installed. Here, the CPU 11a constitutes a reporting unit in cooperation with the touch panel 11f by the processes of Act11 to Act13.

On the other hand, when the accounting machine information is set to an initial value of "0", the CPU 11a displays a transmission error message indicating that accounting data cannot be transmitted, in a portion of the region of the accounting confirmation screen SC2, for example, the display area R4, as Act14. Thereafter, the CPU 11a performs a non-transmissible process. In the non-transmissible process, for example, accounting data having a unique identification code attached thereto is transmitted to a server, and the printer 11g is driven, thereby issuing an accounting ticket on which a bar code indicating the identification code is printed. The accounting ticket is given to a shopper. For example, the shopper makes the bar code of the accounting ticket read by the scanner 12e of the settlement device 12 which is provided at a location separate from a checkout lane. In this manner, the CPU 12a of the settlement device 12 acquires the accounting data to which the identification code obtained from the bar code is attached, from the server. The CPU 12a performs a settlement process on the basis of the accounting data.

For example, it is assumed that a transmission order is set in order of the settlement device 12-A, the settlement device 12-B, and the settlement device 12-C with respect to the three settlement devices 12-A, 12-B, and 12-C connected to the registration device 11. In addition, it is assumed that the priority list table T of the data illustrated in FIG. 3 is set in the memory region M5 of each of the settlement devices 12-A, 12-B, and 12-C. In this example, when all of the settlement devices 12-A, 12-B, and 12-C can perform a settlement process, an accounting data message having identification information "A" of the settlement device 12-A set therein is transferred from the settlement device 12-A to the settlement device 12-B in a time slot of a.m. 10:00. The accounting data message having identification information "A" of the settlement device 12-A set therein is also transferred from the settlement device 12-B to the settlement device 12-C. An accounting machine response command having identification information "A" of the settlement device 12-A set therein is transmitted from the settlement device 12-C to the registration device 11 and the other settlement devices 12-A and 12-B. As a result, in the registration device 11, display for leading to the settlement device 12-A is performed. In addition, a settlement screen is displayed in the settlement device 12-A, and a settlement process can be performed.

On the other hand, the accounting data message having identification information "A" of the settlement device 12-A set therein is transferred from the settlement device 12-A to the settlement device 12-B in a time slot of a.m. 11:00, while an accounting data message having identification information "B" of the settlement device 12-B set therein is transferred from the settlement device 12-B to the settlement device 12-C. An accounting machine response command having the identification information "B" of the settlement device 12-B set therein is transferred from the settlement device 12-C to the registration device 11 and the other settlement devices 12-A and 12-B. As a result, in the registration device 11, display for leading to the settlement device 12-B is performed. In addition, a settlement screen is displayed in the settlement device 12-B, and a settlement process can be performed.

Meanwhile, when an error occurs in the settlement device 12-A and the settlement device 12-B is busy, even in a time slot of a.m. 10:00 as illustrated in FIG. 9, an accounting data message having accounting machine information being set to an initial value of "0" is transferred to the settlement device 12-C. An accounting machine response command having identification information "C" of the device set therein is transmitted from the settlement device 12-C to the registration device 11 and the other settlement devices 12-A and 12-B. As a result, in the registration device 11, display for leading to the settlement device 12-C is performed as illustrated in FIG. 10. In addition, a settlement screen is displayed in the settlement device 12-C, and a settlement process can be performed.

In this manner, according to the checkout system 10, the registration device 11 may transmit accounting data to the settlement device 12 identified by the transmission destination information stored in the transmission destination memory M2, and thus it is not necessary to select a settlement device serving as a transmission destination of accounting data for each transaction. For this reason, it is possible to reduce the burden of work on the store clerk 21, for example, as compared to a case where the store clerk 21 operating the registration device 11 selects the settlement device 12 serving as a transmission destination of accounting data for each transaction. In addition, it is possible to reduce the burden of processing on the registration device 11, as compared to a configuration in which the registration device 11 selects a transmission destination of accounting data for each transaction on the basis of states of the settlement devices 12. Further, the store clerk may lead the shopper 22 in accordance with leading display, thereby eliminating the trouble of visually confirming by which settlement device 12 a settlement process can be performed.

Further, in each settlement device 12, the order of priority which is a determination condition for determining whether or not the settlement device performs a settlement process in preference to another settlement device is changed for each time slot. Therefore, a settlement device performing a settlement process is not concentrated on a device having a higher order of priority, and thus it is possible to reduce the frequency of occurrence of an error such as a no-change error or an out-of-paper error.

### Second Exemplary Embodiment

Next, a second exemplary embodiment will be described. Meanwhile, the second exemplary embodiment is also applied to the checkout system 10 illustrated in FIG. 1. Accordingly, only differences from the first exemplary embodiment will be described below.

FIG. 11 is a schematic diagram illustrating a data structure of an accounting data message. As seen from comparison between FIG. 4A and FIG. 11, in the second exemplary embodiment, an item of "comparison value" is added to an accounting data message. The comparison value is a value of a comparison target which is a factor of an error occurring in the settlement device 12. For example, in the settlement device 12, being out of receipt paper in the printer 12g causes an out-of-paper error. Consequently, in this exemplary embodiment, the amount of receipt paper remaining is set to be the value of the comparison target.

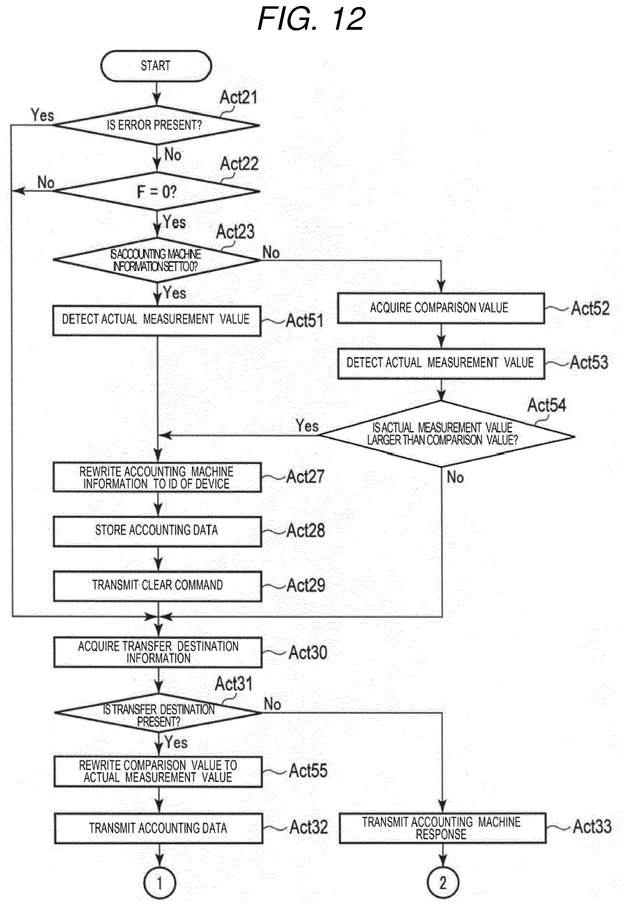

FIG. 12 is a flow chart illustrating a main procedure of an accounting data reception process performed by the CPU 12a of the settlement device 12, and processing blocks in common with FIG. 6 will be denoted by the same reference numerals and signs. As illustrated in FIG. 12, the CPU 12a determines whether or not accounting machine information of an accounting data message is "0", as Act23. When the accounting machine information is "0" (YES in Act23), the CPU 12a detects an actual measurement value of a comparison target, as Act51. That is, the CPU 12a detects the amount of receipt paper remaining from a residual amount sensor mounted to the printer 12g. Thereafter, the CPU 12a proceeds to the process of Act27.

When the accounting machine information is a value other than "0", that is, identification information of another settlement device 12, the CPU 12a acquires a comparison value from the accounting data message, as Act52. In addition, the CPU 12a detects an actual measurement value of the comparison target, as Act53. The CPU 12a determines whether or not the actual measurement value is larger than the comparison value, as Act54. When the actual measurement value is larger than the comparison value (YES in Act54), that is, when the amount of receipt paper remaining of the device is larger than that of another settlement device having a precedent transmission order, the settlement device performs a settlement process in preference to the another settlement device having a precedent transmission order. In this case, the CPU 12a proceeds to the process of Act27. On the other hand, when the actual measurement value is equal to or less than the comparison value (NO in Act54), that is, when the amount of receipt paper remaining of the device is equal to or less than that of the another settlement device having a precedent transmission order, the another settlement device having a precedent transmission order preferentially performs a settlement process. In this case, the CPU 12a proceeds to the process of Act30.

The CPU 12a determines the presence or absence of a transfer destination, as Act31. When a transfer destination is present (YES in Act31), the CPU 12a rewrites the comparison value of the accounting data message to the actual measurement value acquired by the process of Act51 or Act53, as Act55. Thereafter, the CPU 12a performs the process of Act32 and the subsequent processes in the same manner as in the first exemplary embodiment.

According to the second exemplary embodiment, a settlement device having the largest amount of receipt paper remaining, among settlement devices capable of performing a settlement process, is preferentially determined as an accounting machine regardless of a transmission order which is set between the plurality of settlement devices 12. Therefore, the registration device 11 does not need to select a settlement device serving as a transmission destination of accounting data for each transaction, and it is possible to reduce the frequency of occurrence of an out-of-paper error.

### Another Exemplary Embodiment

In the first exemplary embodiment, each settlement device 12 stores the priority list table T. As another exemplary embodiment, the priority list table T is stored in a server on the LAN 13. Each settlement device 12 has access to the server to acquire data of the priority list table T. It is easy to change the priority list table T by adopting such a configuration.

In the second exemplary embodiment, the amount of receipt paper remaining is set to be a value of a comparison target. As another exemplary embodiment, the amount of change remaining in the automatic change machine 12k is set to be a value of a comparison target. In this manner, it is possible to suppress the frequency of occurrence of a no-change error. Meanwhile, it is needless to say that the value of the comparison target is not limited to the amount of receipt paper remaining and the amount of change remaining.

In the exemplary embodiments, a transmission destination address of an accounting machine response command is set to be a communication address allowing reception by the registration device 11 and all of the other settlement devices 12. As another exemplary embodiment, a transmission destination address of an accounting machine response command is set to be a communication address of the registration device 11. In this case, the CPU 11 a of the registration device 11 receiving the accounting machine response command transmits an accounting execution command to the settlement device 12 which is an accounting machine response command transmission source. The CPU 12a of the settlement device 12 receiving the accounting execution command performs the processes of Act46 to Act49 of FIG. 7.

Meanwhile, the transfer of the registration device 11 and the settlement device 12 is generally performed in a state where programs such as a control program are stored in a ROM. However, the exemplary embodiments are not limited thereto, and a control program and the like transferred separately from a computer device may be written in a writable storage device included in the computer device in accordance with the operation of a user or the like. The transfer of the control program and the like can be performed by being recorded in a removable storage medium or by communication through a network. The form of the storage medium does not matter as long as the medium is configured to be capable of storing programs and being read by a device, such as a CD-ROM, a memory card, and the like. In addition, functions capable of being obtained by installing or downloading programs may be realized in cooperation with an operating system (OS) within the device.

Although some embodiments have been described above, those embodiments are described as examples, and do not intend to limit the scope of the invention. Those novel embodiments may be embodied in other various modes, and may be variously omitted, substituted, and modified without departing from the scope of the invention. Those embodiments and modification thereof are within the scope and the gist of the invention, and are within the scope of the invention described in the scope of claims and the equivalent thereof.

## Claims

1. A checkout system which is configured such that a registration device generating accounting data necessary for settlement of a transaction on the basis of input data and a plurality of settlement devices performing a settlement process on the basis of the accounting data are connected to each other through a network and which is configured to sequentially transmit the accounting data generated by the registration device through the network in a transmission order which is set between the plurality of settlement devices,
wherein each of the plurality of settlement devices includes
a reception unit that receives the accounting data transmitted through the network,
a determination unit that determines whether or not the device performs the settlement process of the accounting data received by the reception unit in preference to another settlement device having a precedent transmission order, on the basis of predetermined determination conditions,
a transmission unit that transmits identification information of the device when the determination unit determines that the device preferentially performs the settlement process in a case where the transmission order set in the device is not final, and transmits identification information of the another settlement device having a precedent transmission order when the determination unit determines that the another settlement device preferentially performs the settlement process, together with the accounting data, and
a notification unit that notifies the registration device of the identification information of the device when the determination unit determines that the device preferentially performs the settlement process in a case where the transmission order which is set in the device is final, and notifies the registration device of the identification information of the another settlement device having a precedent transmission order when the determination unit determines that the another settlement device preferentially performs the settlement process, and
wherein the registration device includes a reporting unit that makes a report for guiding a customer to the settlement device identified by the identification information which is given notice of by the notification unit.

2. The system-according to claim 1,
wherein the determination unit determines that the settlement device having a higher order of priority for each time slot, which is allocated between the plurality of settlement devices, preferentially performs the settlement process, with reference to information of the order of priority for each time slot.

3. The system-according to claim 1 or 2,
wherein the settlement device further includes a detection unit that detects an actual measurement value of a comparison target included in the settlement device, and
wherein the determination unit compares the actual measurement value of the comparison target, which is detected by the detection unit of the another settlement device having a precedent transmission order, with the actual measurement value of the comparison target which is detected by the detection unit of the device, and determines that the settlement device having a larger actual measurement value preferentially performs the settlement process.

4. The system according to any one of claims 1 to 3,
wherein the settlement device further includes
a storage unit that stores the accounting data received by the reception unit,
an instructing unit that instructs the another settlement device having a precedent transmission order to clear the accounting data when the determination unit determines that the device preferentially performs the settlement process, and
a clearing unit that clears the accounting data stored in the storage unit when the clearing unit is instructed to clear the accounting data by the another settlement device.

5. A settlement device of a checkout system which is configured such that a registration device generating accounting data necessary for settlement of a transaction on the basis of input data and a plurality of settlement devices performing a settlement process on the basis of the accounting data are connected to each other through a network and which is configured to sequentially transmit the accounting data generated by the registration device through the network in a transmission order which is set between the plurality of settlement devices, the settlement device comprising:
a reception unit that receives the accounting data transmitted through the network;
a determination unit that determines whether or not the device performs a settlement process of the accounting data received by the reception unit in preference to another settlement device having a precedent transmission order, on the basis of predetermined determination conditions;
a transmission unit that transmits identification information of the device when the determination unit determines that the device preferentially performs the settlement process in a case where the transmission order set in the device is not final, and transmits identification information of the another settlement device having a precedent transmission order when the determination unit determines that the another settlement device preferentially performs the settlement process, together with the accounting data; and
a notification unit that notifies the registration device of the identification information of the device when the determination unit determines that the device preferentially performs the settlement process in a case where the transmission order which is set in the device is final, and notifies the registration device of the identification information of the another settlement device having a precedent transmission order when the determination unit determines that the another settlement device preferentially performs the settlement process.

6. The settlement device of a checkout system according to claim 5, wherein the determination unit determines that the settlement device having a higher order of priority for each time slot, which is allocated between the plurality of settlement devices, preferentially performs the settlement process, with reference to information of the order of priority for each time slot.

7. The system-according to claim 5 or 6,
wherein the settlement device further includes a detection unit that detects an actual measurement value of a comparison target included in the settlement device, and
wherein the determination unit compares the actual measurement value of the comparison target, which is detected by the detection unit of the another settlement device having a precedent transmission order, with the actual measurement value of the comparison target which is detected by the detection unit of the device, and determines that the settlement device having a larger actual measurement value preferentially performs the settlement process.

8. The system according to any one of claims 5 to 7,
wherein the settlement device further includes
a storage unit that stores the accounting data received by the reception unit,
an instructing unit that instructs the another settlement device having a precedent transmission order to clear the accounting data when the determination unit determines that the device preferentially performs the settlement process, and
a clearing unit that clears the accounting data stored in the storage unit when the clearing unit is instructed to clear the accounting data by the another settlement device.

9. A method for processing, by a settlement device, settlement of a transaction, comprising the steps of:
- receiving, by a reception unit, the accounting data transmitted through the network;
- determining, by a determination unit, whether or not the device performs a settlement process of the accounting data received by the reception unit in preference to another settlement device having a precedent transmission order, on the basis of predetermined determination conditions;
- transmitting, by a transmission unit, identification information of the device when the determination unit determines that the device preferentially performs the settlement process in a case where the transmission order set in the device is not final, and transmitting identification information of the another settlement device having a precedent transmission order when the determination unit determines that the another settlement device preferentially performs the settlement process, together with the accounting data; and
- notifying, by a notification unit, a registration device of the identification information of the device when the determination unit determines that the device preferentially performs the settlement process in a case where the transmission order which is set in the device is final, and notifying the registration device of the identification information of the another settlement device having a precedent transmission order when the determination unit determines that the another settlement device preferentially performs the settlement process.

10. The method according to claim 9,
wherein the determining step by the determination unit comprises determining that the settlement device having a higher order of priority for each time slot, which is allocated between the plurality of settlement devices, preferentially performs the settlement process, with reference to information of the order of priority for each time slot.

11. The method according to claim 9 or 10, further comprising the step of:
- detecting, by a detection unit, an actual measurement value of a comparison target included in the settlement device, and the determining step by a determination unit comprises
- comparing, by the determination unit, the actual measurement value of the comparison target, which is detected by the detection unit of another settlement device having a precedent transmission order, with the actual measurement value of the comparison target which is detected by the detection unit of the device, and determining that the settlement device having a larger actual measurement value preferentially performs the settlement process.

12. The method according to any one of claims 9 to 11, further comprising the step of:
- storing, by a storage unit, the accounting data received by the reception unit;
- instructing, by an instructing unit, another settlement device having a precedent transmission order to clear the accounting data when the determination unit determines that the device preferentially performs the settlement process; and
- clearing, by a clearing unit, the accounting data stored in the storage unit when the clearing unit is instructed to clear the accounting data by the another settlement device.

13. A method for performing a checkout, comprising the steps of the method
according to any one of claims 9 to 12, further comprising the steps of:
- generating, by a registration device, accounting data necessary for settlement of a transaction on the basis of input data and
- performing, by each of a plurality of settlement devices, a settlement process on the basis of the accounting data are connected to each other through a network and
- sequentially transmitting the accounting data generated by the registration device through the network in a transmission order which is set between the plurality of settlement devices.
